# EUROPEAN PATENT APPLICATION

(11) **EP 2 495 065 A2**
(43) Date of publication of application: **05.09.2012**
(21) Application number: 10826988.7
(22) Date of filing: 07.10.2010
(51) Int. Cl.: B23K 28/02, B23K 26/20, B23K 1/008

(54) **STAINLESS STEEL JOINING METHOD**

(30) Priority: 26.10.2009 KR 20090101530
(71) Applicant: Kyungdong Navien Co., Ltd., Pyungtaek-si Gyunggi-do 450-818 (KR)
(72) Inventor: YANG, Sung Pyo, Pyeongtaek-si Gyeonggi-do 450-746 (KR); YU, Sung Geun, Pyeongtaek-si Gyeonggi-do 450-100 (KR)
(74) Representative: reuteler & cie SA
(86) International application number: PCT/KR2010/006840
(87) International publication number: WO 2011/052903

(57) **Abstract**

Disclosed is a stainless steel joining method which can make a welding bead narrow and deep and prevent fatigue strength from being lowered due to thermal stress, thereby preventing deformation of a product. A stainless steel joining method comprises: a first step of inserting and disposing a thin brazing filler metal between joining surfaces of two stainless steel pieces; a second step of radiating a laser beam onto the joining surfaces to perform a welding process by a contactless laser welder; a third step of filling the brazing filler metal molten in a brazing furnace between the joining surfaces to perform a brazing process; and a fourth step of cooling the brazing filler metal filled between the joining surfaces. According to the stainless steel joining method of the present invention, since a thin brazing filler metal is inserted between stainless steel base metals and a contactless laser welding operation is performed to joining portions, a welding bead can be formed narrow and deep, making it possible to prevent a fatigue strength from being lowered due to thermal stress and the product from being deformed.

## Description

### [Technical Field]

The present invention relates to a stainless steel joining method, and more particularly, to a stainless steel joining method which can make a welding bead narrow and deep and prevent fatigue strength from being lowered due to thermal stress, thereby preventing deformation of a product.

### [Background Art]

Since a lap welding or butt welding process for stainless steel according to the conventional art generally employs a stainless steel material which can be readily formed to a product, a brazing welding method using stainless steel of different materials or a butt welding method using a TIG welding process has been widely used.

The brazing welding method uses the capillary phenomenon, and allows a molten brazing filler metal to flow into and fill a gap between proper joining portions of base metals due to the capillary phenomenon. Then, a suitable strength (70 Kgf/cm²) can be obtained only by maintaining the gap properly.

However, it is not easy to maintain the flatness of the formed base metal at not more than 0.1 mm, and the gap of the joining portions will become larger when the base metals overlap each other. Further, fatigue strength will be lowered due to thermal stress by lapwelding or butt-welding different stainless steel materials.

If the brazing welding process is performed in this condition, a complete joining operation is impossible, severely influencing the quality and performance of the product. Also, when two base metals are erected vertically, the molten brazing filler metal will flow down due to the gravity. In this case, the upper portion will fail to be joined completely.

Meanwhile, the Tungsten Inert Gas welding method generates much heat as compared with laser welding so that generates a deformation of the product, cannot form a narrow and deep welding bead easily, and may not perform a lap welding or butt welding process completely when a gap of joining portions generated when the two stainless steel metals overlap each other.

Further, even when the lap welding or butt welding operation is completed, stress corrosion cracking (hereinafter, referred to as 'SCC') or gap corrosion may be generated due to creation of the gap of the joining portions, which is not suitable for a stainless steel joining method requiring precision or design performance.

### [Disclosure]

### [Technical Problem]

The present invention has been made in an effort to provide a stainless steel joining method in which stainless steel base metals are used and a thin brazing filler metal is inserted between the base metals to perform a contactless laser welding process, thereby preventing SCC, corrosion of gaps and lowering of fatigue strength due to thermal stress.

### [Technical Solution]

An exemplary embodiment of the present invention provides a stainless steel joining method, comprising: (1) inserting and disposing a thin brazing filler metal between joining surfaces of two stainless steel pieces; (2) radiating a laser beam onto the joining surfaces to perform a welding process by a contactless laser welder; (3) filling the brazing filler metal molten in a brazing furnace between the joining surfaces to perform a brazing process; and (4) cooling the filler metal filled between the joining surfaces.

Further, the filler metal of step (1) may consist of a copper alloy or paste (containing copper and nickel), such as pure copper and a copper alloy containing 0.01 to 0.03% of phosphorus.

Also, the brazing filler metal of step (1) may have a thickness of 0.025 to 0.5 mm.

In addition, step (2) may be controlled by a control unit receiving data from a 3-dimensional measuring unit where a 3-dimensional coordinate is displayed digitally.

### [Advantageous Effects]

According to the stainless steel joining method of the present invention, since a thin brazing filler metal is inserted between stainless steel base metals and a contactless laser welding operation is performed to joining portions, a welding bead can be formed narrow and deep, making it possible to prevent a fatigue strength from being lowered due to thermal stress and the product from being deformed.

In addition, the brazing filler metal inserted between the stainless steel base metals is molten through a brazing process to permeate into all the gaps of the joining portions to join the gaps once again, making it possible to further enhance a quality and a performance of a butt welded or lap welded stainless steel product.

### [Description of Drawings]

FIG. 1 is a schematic view for describing a method of performing a welding process by a laser welder according to an exemplary embodiment of the present invention.
FIG. 2 is an enlarged view of portion 'A' of FIG. 1.
FIG. 3 is a schematic view for describing a method of performing a brazing process by a brazing furnace according to an exemplary embodiment of the present invention.
FIG. 4 is an enlarged view of portion 'B' of FIG. 3.

### <Explanation of Main Reference Numerals and Symbols>

| | | | |
|---|---|---|---|
| 10: | Base metal | 20: | Brazing filler metal |
| 30: | Laser welder | 40: | Laser beam |
| 50: | Robot | 60: | Brazing furnace |

### [Best Mode]

Hereinafter, configurations and operations of exemplary embodiments of the present invention will be described in detail with reference to the accompanying drawings so that those skilled in the art to which the present invention pertains can easily carry out the invention.

Meanwhile, the configurations and operations of the present invention which are shown in the drawings and described with reference to the drawings will be described through at least one exemplary embodiment, and the scope, the configurations and operations of the present invention are not limited thereto.

Accordingly, the present invention may be variously modified and may have various embodiments, and it should be construed that all modifications, equivalents, and alternatives fall in the scope and technical range of the present invention.

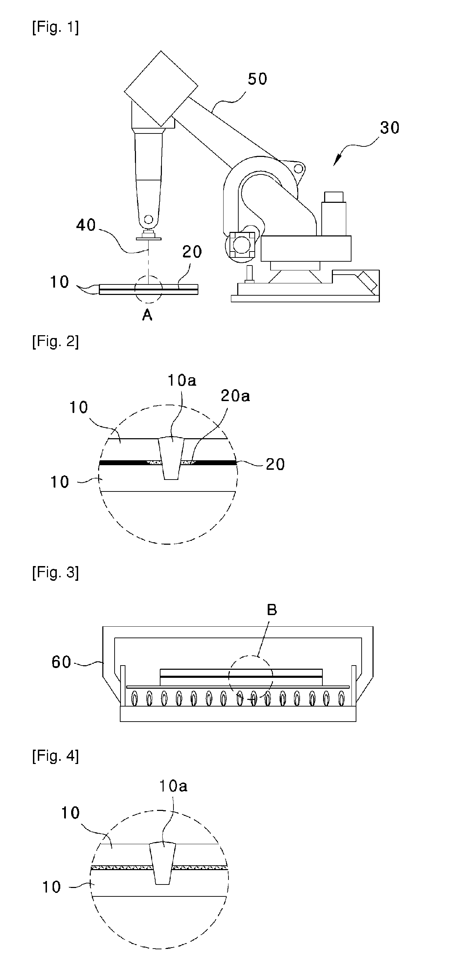

FIG. 1 is a schematic view for describing a method of performing a welding process by a laser welder according to an exemplary embodiment of the present invention. FIG. 2 is an enlarged view of portion 'A' of FIG. 1. FIG. 3 is a schematic view for describing a method of performing a brazing process by a brazing furnace according to an exemplary embodiment of the present invention. FIG. 4 is an enlarged view of portion 'B' of FIG. 3.

The stainless steel joining method according to the exemplary embodiment of the present invention includes steps (1) to (4).

As shown in the accompanying FIG. 1, the step (1) is a step of inserting and disposing a brazing filler metal 20 between joining surfaces of two stainless steel pieces of the same material or different materials as a base metal 10 to be joined. The present invention can be carried out by any one of butt welding or lap welding.

In order to suppress generation of the above-described SCC, it is preferable that the stainless steel pieces used here are made of iron-chrome based ferrite stainless steel rather than austenite steel.

Here, the brazing filler metal 20 preferably consists of a copper alloy or paste (containing copper and nickel), such as pure copper and a copper alloy containing 0.01 to 0.03% of phosphorus, and preferably has a thickness of 0.025 to 0.5 mm.

For example, the copper alloy may contain 99.94% of copper and 0.0254% of phosphorous, and may have a thickness of 0.1 mm.

Referring to the accompanying FIGS. 1 and 2, the step (2) is a step of performing radiating a laser beam 40 onto the joining surfaces to perform a welding process by a contactless laser welder 30.

Here, it is preferable that the radiation of the laser beam 40 is controlled to be performed automatically by a robot 50 by a control unit (not shown) which receives data from a 3-dimensional measuring unit where a 3-dimensional coordinate is displayed digitally.

The accompanying FIG. 2 shows a state where a portion 10a of the base metal molten by the laser beam is welded, and the brazing filler metal 20a adjacent to the welded portion is partially molten.

In this step, since a gap between the base metals created due to peripheral heat generated during the welding process is filled with the molten brazing filler metal so that the base metals are jointed to each other, a restriction on the flatness of the joining surfaces of the stainless steel base metals contacting each other is lessened.

Further, through the following brazing process, the brazing filler metal inserted between the stainless steel base metals is molten to permeate all the gaps of the joining surfaces to join the gaps once again, making it possible to form a welding bead narrow and deep, and accordingly preventing fatigue strength from being lowered due to thermal stress.

As shown in the accompanying FIGS. 3 and 4, the step (3) is a step of filling the brazing filler metal molten in a brazing furnace 60 between the joining surfaces to perform a brazing process. Then, in order to remove an oxide film on surfaces of the base metals to be joined, borate, boron, and fused borax may be used as a flux.

Finally, the step (4) is a step of cooling the brazing filler metal filled between the joined surfaces.

Thus, according to the stainless steel joining method according to the exemplary embodiment of the present invention, the brazing filler metal is inserted between the stainless steel of the same material and the contactless laser welding process is performed at the joining portion by using a robot, making it possible to prevent fatigue strength from being lowered due to thermal stress and the product from being deformed.

Further, a brazing filler metal is molten due to the heat generated during a laser welding process, permeates into a gap of joining portions created when a stainless steel base metal overlaps another base metal and joins the gap. And then, the brazing filler metal inserted between the stainless steel base metals is molten through a following brazing process to permeate into all the gaps of the joining portions to join the gaps once again, making it possible to further enhance a quality and a performance of a butt welded or lap welded stainless steel product.

Therefore, since there is no possibility of generating SCC and corrosion of gaps and butt welding or lap welding is performed firmly and certainly, the material costs of a stainless steel product can be reduced and productivity can be improved during a manufacturing process.

It is apparent to those skilled in the art to which the present invention pertains that the present invention is not limited to the exemplary embodiment and may be variously modified without departing from the scope of the present invention.

## Claims

1. A stainless steel joining method, comprising:
a first step of inserting and disposing a thin brazing filler metal between joining surfaces of two stainless steel pieces;
a second step of radiating a laser beam onto the joining surfaces to perform a welding process by a contactless laser welder;
a third step of filling the brazing filler metal molten in a brazing furnace between the joining surfaces to perform a brazing process; and
a fourth step of cooling the brazing filler metal filled between the joining surfaces.

2. The stainless steel joining method of claim 1, wherein the brazing filler metal of the first step consists of a copper alloy or paste containing copper and nickel, such as pure copper and a copper alloy containing 0.01 to 0.03% of phosphorus.

3. The stainless steel joining method of claim 1, wherein the brazing filler metal of the first step has a thickness of 0.025 to 0.5 mm.

4. The stainless steel joining method of claim 1, wherein the second step is controlled by a control unit receiving data from a 3-dimensional measuring unit where a 3-dimensional coordinate is displayed digitally.
